(19) Europäisches Patentamt
European Patent Office
Office européen des brevets

(11) **EP 4 193 083 B1**

(12) **EUROPÄISCHE PATENTSCHRIFT**

(45) Veröffentlichungstag und Bekanntmachung des Hinweises auf die Patenterteilung:
**22.04.2026 Patentblatt 2026/17**

(21) Anmeldenummer: **21754940.1**

(22) Anmeldetag: **27.07.2021**

(51) Internationale Patentklassifikation (IPC):
**F16K 31/122** (2006.01)     **F16K 31/126** (2006.01)
**F16K 37/00** (2006.01)

(52) Gemeinsame Patentklassifikation (CPC):
**F16K 31/1221; F16K 31/1262; F16K 37/0025; F16K 37/0041; F16K 37/0083**

(86) Internationale Anmeldenummer:
**PCT/EP2021/070961**

(87) Internationale Veröffentlichungsnummer:
**WO 2022/028947 (10.02.2022 Gazette 2022/06)**

(54) **FEDERBRUCHERKENNUNG IN EINEM VORGESPANNTEN ANTRIEB EINES STELLVENTILS**

SPRING BREAKAGE DETECTION IN A PRELOADED DRIVE OF A CONTROL VALVE

DÉTECTION DE RUPTURE DE RESSORT DANS UN ENTRAÎNEMENT PRÉCONTRAINT D'UNE SOUPAPE DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.08.2020 DE 102020120696**

(43) Veröffentlichungstag der Anmeldung:
**14.06.2023 Patentblatt 2023/24**

(73) Patentinhaber: **Samson Aktiengesellschaft 60314 Frankfurt am Main (DE)**

(72) Erfinder: **WAGNER-STÜRZ, David 64367 Mühltal (DE)**

(74) Vertreter: **noventive Patentanwaltsgesellschaft mbH Riesstraße 16 80992 München (DE)**

(56) Entgegenhaltungen:
DE-U- 6 930 665     DE-U1- 29 612 346
US-A- 4 976 144

**Beschreibung**

Gebiet der Erfindung

Die Erfindung betrifft ein Verfahren zum Erkennen des Bruchs einer Feder in einem vorgespannten Antrieb eines Stellventils. Stellventile können als Dreh- oder Hubventile ausgeführt sein. Sie werden häufig in prozess- oder verfahrenstechnischen Anlagen zum Steuern oder Regulieren eines Prozesses bzw. Prozessmediums eingesetzt. Andere Anwendungsbeispiele sind solarthermische Anlagen oder Nah- und Fernwärmesysteme. Neben Steuer- und Regelanwendungen werden Stellventile auch als Sicherheitsventile zur Absicherung von Anlagen bzw. Prozessen genutzt.

Stellventile weisen in der Regel einen Antrieb bzw. Aktuator und ein bewegliches Ventilglied zum Steuern oder Regulieren des Prozesses bzw. Prozessmediums auf. Der Antrieb bzw. Aktuator wirkt dabei auf eine Antriebsstange des Ventilglieds. Er befindet sich meist außerhalb eines fluiddichten Ventilgehäuses. Die Antriebsstange des Ventilglieds wird dementsprechend durch das fluiddichte Gehäuse geführt, wobei eine Dichtung (z.B. Packung) die Antriebsstange zum Gehäuse hin nach außen abdichtet.

Zwischen Antriebsstange und Dichtung treten oft Reibungsverluste auf. Andere Reibungsverluste entstehen z.B. durch Ablagerungen, Abrieb oder Korrosion oder durch weitere Dichtungen im Antrieb. Eine fehlerhafte Installation der Komponenten des Stellventils oder des Stellventils selbst kann ebenfalls zu Reibungsverlusten und unerwünschten Belastungen der Komponenten des Stellventils führen.

Als Antrieb zum Bewegen der Antriebsstange dienen typischerweise fluidische Antriebe. In vielen Fällen werden pneumatische Antriebe zum Einsatz gebracht, bei denen zum Bewegen der Antriebsstange eine Kammer mit Druckluft belüftet oder entlüftet wird.

Im Bereich sicherheitsrelevanter Armaturen bzw. Sicherheitsventile werden häufig pneumatische Antriebe verwendet, die von Federkräften einseitig vorgespannt werden. Die Druckluft wirkt dabei immer gegen die Federkraft, mit der der Antrieb vorgespannt wurde. Vorgespannte Antriebe verfahren durch die Wirkung der Federkräfte eigenständig in eine sichere Position bzw. Sicherheitsstellung, wenn der Antrieb entlüftet wird, also die Druckluft aus der Kammer des Antriebs entweicht. Dies geschieht z.B. dann, wenn ein Strom-Druck(I/P)-Wandler oder ein Magnetventil nicht mehr bestromt wird.

Bei Sicherheitsventilen ist das Ventil im normalen Betrieb häufig offen, und im Fehlerfall (z.B. Stromausfall) schließt das Ventil selbsttätig. Entlüftet man nun den Antrieb, beginnt das Ventil sich zu schließen, sobald die Federkräfte das Ventilglied gegen die ggf. vorhandene Haftreibung losgerissen haben. Die Sicherheitsstellung kann natürlich auch stromlos offen sein (Antrieb entlüftet) und bestromt geschlossen (Antrieb belüftet).

Die Position oder der Hub des Ventilglieds wird in der Regel mit Bezug zur Schließstellung angegeben. Ist die Position oder der Hub des Ventilglieds mit 0 angegeben, so befindet sich das Ventilglied in der Schließstellung. Ist die Position oder der Hub des Ventilglieds mit 100 % angegeben, so befindet sich das Ventilglied in der der Schließstellung gegenüberliegenden Position. Diese Position entspricht einem vollständig geöffneten Ventil.

In vielen Fällen werden die Federkräfte von einer oder mehreren Federn in einem Federpaket ausgeübt. Die Federn sind dabei häufig als Spiralfedern aus Metall (insbesondere Stahl) ausgeführt und parallel angeordnet, so dass sich die Federkonstanten bzw. die Federkräfte der einzelnen Federn addieren. Luftfedern oder elastische (Gel-)Kissen können ebenfalls zur Vorspannung genutzt werden.

Ein Bruch oder eine Beschädigung einer Feder eines vorgespannten Antriebs kann zum Ausfall des Sicherheitsventils führen oder zumindest zu einer erhöhten Reaktionszeit. Bei vielen sicherheitskritischen Anwendungsfällen ist dies jedoch inakzeptabel und kommt einem Ausfall des Ventils gleich. Zudem können sich ungleichmäßige Belastungen des Antriebs bzw. des Ventilglieds ergeben, wodurch der Schub des Antriebs verringert und der Betriebsbereich des Ventils eingeschränkt werden kann. Eine verringerte Sitzlast und damit einhergehende Leckage in der Schließstellung kann ebenfalls eine Folge sein. Außerdem erhöht sich der Verschleiß der ungleichmäßig belasteten Komponenten. Der Bruch oder die Beschädigung einer Feder kündigt deshalb in vielen Fällen einen bevorstehenden Ausfall weiterer Federn oder Komponenten des Stellventils an.

Im Allgemeinen kann der Bruch oder die Beschädigung einer Feder auf eine Reihe von Faktoren wie Korrosion oder Ermüdung der Feder zurückzuführen sein. Strukturelle Ausfälle anderer Komponenten des Antriebs bzw. des Stellventils sowie eine fehlerhafte Installation können ebenfalls den Bruch oder Ausfall einer Feder herbeiführen.

Die Feder muss bei einem Bruch nicht notwendigerweise in zwei oder mehr Teile zerbrechen. Die Feder kann auch plastisch verformt oder verbogen werden. Schweißnähte, an denen die Feder fixiert ist, können brechen und zu einem Verrutschen oder Verkippen der Feder führen. Bei Luft- oder Gelfedern können die Membranen aufbrechen oder platzen. Von einem Bruch der Feder wird daher im Allgemeinen gesprochen, wenn sich die Federkonstante der Feder in einer Weise ändert, dass die Feder ihre Funktion bzw. Wirkung verliert bzw. zur Vorspannung des Antriebs keinen oder nur noch einen stark reduzierten Beitrag leistet.

Stand der Technik

Im Stand der Technik finden sich bereits verschiedene Methoden, um den Bruch einer Feder in einem vorgespannten Antrieb eines Stellventils zu erkennen. In der Patentschrift US 4,976,144 A wird beispielsweise ein Bench-Set-Diagnose-Verfahren vorgeschlagen. Dazu wird im Rahmen eines Testbetriebs das Ventilglied verfahren und eine Hub-Druck- Kurve beim Belüften des Antriebs sowie beim Entlüften des Antriebs aufgenommen. Die beiden Kurven sind aufgrund von Reibungsverlusten nicht gleich. Sie definieren einen Bereich, der als Ventilsignatur bezeichnet wird. Die Steigung der Hub-Druck-Kurven ist ein Maß für die Federkonstante des Federpakets. Der Ausfall einer Feder wird anhand einer Veränderung der Steigung bzw. der Steigungen erkannt.

In ähnlicher Weise wird in der DE 102015225999 A1 der zeitliche Verlauf eines Betriebsparameters beim Öffnen und Schließen aufgezeichnet, der Rückschlüsse auf die zum Öffnen bzw. Schließen benötigte Kraft zulässt. Der Bruch einer Feder wird dabei anhand einer Änderung der Kraft erkannt, die zum Öffnen bzw. Schließen des Ventils benötigt wird.

Um einen Testbetrieb zum Erkennen eines Federbruchs zu vermeiden, wird in der Offenlegungsschrift WO 2004/074947 A1 vorgeschlagen, die Federkonstante anhand von Hub-Druck-Kurven zu berechnen, die im laufenden Betrieb aufgenommen werden. Dazu wird das Ventilglied testweise um eine kleine Strecke verfahren und wieder zur Ausgangsposition zurückverfahren. Der Bruch einer Feder wird wiederum anhand der Steigung der dabei aufgenommen Hub-Druck-Kurven erkannt.

Die Gebrauchsmusterschrift DE 296 12 346 U1 offenbart eine alternative Herangehensweise. Dabei wird das Ventilglied zwar ebenfalls testweise verfahren. Die Federkonstante wird jedoch nicht über die Steigung der zugehörigen Hub-Druck-Kurven, sondern über die dabei verstrichene Zeitspanne bestimmt. Bricht eine Feder, muss dem Antrieb weniger Druckluft zu- oder abgeführt werden, um das Ventilglied zu bewegen. Dementsprechend verkürzt sich die Reaktionszeit des Antriebselements, was zum Erkennen des Bruchs oder Ausfalls einer Feder genutzt wird.

In der Offenlegungsschrift WO 2009/111101 A1 wird ebenfalls die Steigung von Hub- Druck-Kurven und die Reaktionszeit des Ventilglieds auf eine vorgegebene Hubänderung zum Bestimmen einer Änderung der Federkonstanten genutzt, um den Bruch oder Ausfall einer Feder zu erkennen (siehe auch Kapitel 3.5 "Ventildiagnose" des Buches "Stellventile" von Ralph Herbrich).

Die bekannten Methoden beruhen auf einem Erkennen von Änderungen der Steigung von Hub-Druck-Kurven oder der Reaktionszeit des Ventilglieds. Das Ventilglied muss dabei in einem gewissen Hub-Bereich verfahren werden, wobei das entsprechende Hub-Delta einen gewissen Bereich überschreiten muss, um sicher eine Steigung oder eine Reaktionszeit berechnen zu können. Dies ist gerade bei statischen Prozessen nicht immer möglich oder führt unter Umständen zu unerwünschten Störungen des Prozesses. Des Weiteren dauert es nach einem Federbruch eine gewisse Zeit bis dieser erkannt wird. Dies kann jedoch in vielen Fällen zu spät sein. Ändern sich darüber hinaus während des Verfahrens die Prozess- oder Prozessmediums-Bedingungen so geht dies direkt in die Analyse ein, so dass ein Federbruch nicht erkannt oder fälschlicherweise erkannt wird. Dellen oder Unregelmäßigkeiten in der Hub-Druck-Kennlinie, die z.B. durch eingelaufene Dichtungen oder Packungen entstehen können, können ebenfalls zu Fehlinterpretationen führen und fälschlicherweise einem Federbruch zugeschrieben werden.

Die US 4 976 144 A offenbart eine Vorrichtung und ein Verfahren zur diagnostischen Prüfung von Fluidsteuerventilen, beispielsweise von pneumatisch betätigten Fluidsteuerventilen. Das Verfahren umfasst dabei die Bereitstellung eines Drucksensors zur Erfassung des sich ändernden Drucks am Eingang des Ventilantriebs sowie die Bereitstellung eines Positionssensors zur Erfassung der Bewegung des Ventilkegels. Gemäß der US 4 976 144 A ist es vorgesehen, dass die Ventilspindelbelastung unmittelbar in Abhängigkeit von der Ventilposition erfasst werden kann und eine zugehörige Kurve auf einem Bildschirm oder einem Drucker ausgegeben werden kann. Eine Analyse dieser Kurve ermöglicht dann ein Ermitteln der Federkonstanten, um anhand der Federkonstanten festzustellen, ob die Feder fehlerhaft oder beschädigt ist.

Aus der DE 296 12 346 U1 ist eine Einrichtung zum Selbsttest pneumatischer Antriebe mit einem Antriebsgehäuse bekannt. Die Einrichtung umfasst ein beweglich gelagertes, mit einem Betätigungsmittel, insbesondere einer Schubstange für ein Stellventil, verbundenes Antriebselement, insbesondere einen Membranteller oder einen Kolben, das zumindest einseitig mit einem einstellbaren Luftdruck beaufschlagbar ist. Die Einrichtung umfasst weiterhin mindestens eine an dem Antriebselement entgegen der Einwirkung des Luftdrucks angreifenden, innerhalb des Antriebsgehäuses angeordnete Feder sowie einen Stellungsmelder, der direkt oder indirekt die Stellung des Antriebselements erfasst. Schließlich umfasst die Einrichtung zumindest auch ein Ventil zur Einstellung des Luftdrucks am Antriebselement durch Zu- oder Ableitung von Druckluft.

Aus der DE 69 30665 U ist eine elektro-mechanische Sicherungsvorrichtung für ein von einem Elektromotor gegen die Kraft einer Schließfeder betätigtes Absperrventil für Gase oder Flüssigkeiten bekannt. Die in Schließrichtung wirkende Ventilfederkraft wird von mindestens zwei Schraubenzugfedern gebildet, die auf der einen Seite über ein Schwenkhebelglied an der Antriebswelle angreifen und auf der anderen Seite an einem Auslöseorgan befestigt sind, das bei Defekt einer jeden Zugfeder den elektrischen Schalter für den Antriebsmotor beaufschlagt.

Aufgabe

Aufgabe der Erfindung ist es, ein Verfahren anzugeben, mit dem der Bruch einer Feder in einem vorgespannten Antrieb eines Stellventils zuverlässiger und einfacher erkannt werden kann, und zwar ohne den laufenden Betrieb stören oder unterbrechen zu müssen.

Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Erkennen eines Bruchs einer Feder in einem vorgespannten Antrieb eines Stellventils vorgeschlagen, wobei das Stellventil dazu bestimmt ist, Teil einer Anlage zu sein, auf der ein Prozess mit einem Prozessmedium abläuft. Das Stellventil weist dabei Folgendes auf:

- ein Ventilglied zur Beeinflussung des Prozessmediums und / oder des Prozesses, der auf der Anlage abläuft,

- einen pneumatischen Antrieb, der dazu eingerichtet ist, das Ventilglied zur Beeinflussung des Prozessmediums und / oder des Prozesses zu positionieren, wobei der pneumatische Antrieb die Feder aufweist, die den Antrieb vorspannt,

- einen Positionssensor zum Messen der Ist-Position des Ventilglieds und

- einen Drucksensor zum Messen des Ist-Drucks in dem pneumatischen Antrieb.

Das Verfahren umfasst folgende Schritte:

1. Bestimmen oder Vorgeben einer Ventilsignatur, wobei die Ventilsignatur es ermöglicht, jeder Ist-Position des Ventilglieds einen Bereich von Drücken zuzuordnen, die beim Betrieb des Stellventils mit einer unbeschädigten Feder erreicht werden können.

2. Messen der Ist-Position des Ventilglieds mithilfe des Positionssensors zu einem Zeitpunkt.

3. Messen des Ist-Drucks in dem pneumatischen Antrieb mithilfe des Drucksensors zu dem Zeitpunkt.

4. Ermitteln, ob die Feder gebrochen ist, wobei ein Bruch der Feder dadurch ermittelt wird, dass der gemessene Ist-Druck kleiner ist als jeder der Drücke, die der gemessenen Ist-Position des Ventilglieds mithilfe der Ventilsignatur zugeordnet werden können, und / oder dass die gemessene Ist-Position größer ist als jede der Positionen, die dem gemessenen Ist-Druck des Ventilglieds mithilfe der Ventilsignatur zugeordnet werden können.

5. Ausgeben einer Meldung, sofern ein Bruch der Feder ermittelt wurde.

Der Bruch oder Ausfall einer Feder vollzieht sich in vielen Betriebssituationen quasi momentan, d.h. die Vorspannkraft der ausfallenden Feder baut sich innerhalb eines Zeitraums ab, der im Verhältnis zu den typischen Zeitskalen der Ventilregelung und / oder des Erreichens eines Kräfte-Gleichgewichts sehr kurz ist. Wegen der direkten Wirkungslinie zwischen der Feder, dem Antrieb bzw. Aktuator und dem Ventilglied ergibt sich eine gleichfalls quasi momentane Änderung im Verhalten des Antriebs bzw. Aktuators und des Ventilglieds. Der Druck, der nach dem Bruch oder Ausfall der Feder zum Erreichen einer bestimmten Ventilgliedposition aufgewendet werden muss, sinkt signifikant und nachhaltig ab. Das vorgeschlagene Verfahren nutzt die systematisch zu geringen Drücke, um den Bruch oder Ausfall einer Feder mit der zur Regelung der Position des Ventilglieds vorhandenen Sensorik zu erkennen, und zwar ohne den laufenden Betrieb unterbrechen zu müssen oder durch zusätzliche Maßnahmen zu stören.

Unmittelbar nach dem Bruch oder Ausfall einer Feder liegt in der Regel kein Gleichgewicht zwischen den Kräften vor, die auf das Ventilglied einwirken. Dazu gehört die von der Druckluft in dem pneumatischen Antrieb auf das Ventilglied ausgeübte Kraft sowie die Federkräfte, die das Ventilglied in die Sicherheitsstellung verfahren, wenn der Antrieb entlüftet wird. In derartigen Nicht-Gleichgewichtssituationen ist der Zusammenhang zwischen der Ist-Position des Ventilglieds und dem Ist-Druck des pneumatischen Antriebs von einer Vielzahl von Faktoren abhängig, die in einer Gleichgewichtssituation keine Rolle spielen. Diese Faktoren können jedoch nur sehr schwer bzw. nicht vollständig erfasst werden. Deshalb können Methoden, die auf einer Bestimmung der Federkonstanten mithilfe der Ist-Position des Ventilglieds und dem Ist-Druck des pneumatischen Antriebs beruhen (oder eine dazu direkt in Bezug stehende Größe wie z.B. die Reaktionszeit, um das Ventilglied von einer ersten zu einer zweiten Position zu bewegen), nicht angewandt werden bzw. kann mit diesen Methoden der Bruch oder Ausfall einer Feder erst dann erkannt werden, wenn sich wieder ein Gleichgewicht der Kräfte ausgebildet hat. Das kann unter Umständen zu spät sein. Das vorgeschlagene Verfahren kann einen Federbruch bereits in Nicht-Gleichgewichtssituationen und damit wesentlich früher und zuverlässiger erkennen als dies mit den im Stand der Technik beschriebenen Methoden möglich ist.

Das Verfahren beruht auf der Messung einer Ist-Position des Ventilglieds und eines Ist- Drucks des pneumatischen Antriebs zu einem gegebenen Zeitpunkt. Weitere Messungen zu weiteren oder verschiedenen Zeitpunkten sind nicht notwendig. Mit weiteren Messungen einhergehende Verzögerungen und / oder Störeinflüsse, z.B. durch Änderungen der Prozess- oder Prozessmediums-Bedingungen, können auf diese Weise reduziert oder sogar vermieden werden.

Das Stellventil kann einen Stellungsregler umfassen, der die Position des Ventilglieds mithilfe des pneumatischen Antriebs und des Positionssensors regelt. Der Stellungsregler kann dazu eingerichtet sein, das vorgeschlagene Verfahren im Rahmen des normalen Regelbetriebs in Form einer zusätzlichen Diagnosefunktion umzusetzen. Er kann zudem dazu eingerichtet sein, beim Erkennen des Bruchs oder Ausfalls einer Feder Daten zu erzeugen, die für den Bruch oder Ausfall beschreibend sind. Diese Daten können im Stellungsregler gespeichert oder an eine Leitwarte der Anlage übertragen werden. In anderen Ausführungsformen können diese Daten in eine Anzeige der Diagnose durch eine geeignete Anzeigeeinrichtung des Stellungsreglers und / oder des Stellventils und / oder der Leitwarte weiterverarbeitet werden.

Die Ventilsignatur kann mithilfe einer Eingabemaske am Stellungsregler, dem Stellventil oder einer Leitwarte bestimmt oder vorgegeben werden. Dies kann durch eine explizite Vorgabe der Druckbereiche, die den Positionen des Ventilglieds zugeordnet werden, und / oder durch einen Kalibrierungszyklus, mit dem die Druckbereiche durch Messung bestimmt werden, erfolgen. Die entsprechenden Daten können in einem Speicher abgelegt und zur Durchführung des

Verfahrens abgerufen werden. Der Kalibrierungszyklus kann z.B. vor oder bei der Installation des Stellungsreglers oder des Stellventils gestartet werden.

Auf diese Weise kann die verwendete Ventilsignatur an die konkrete Einbausituation des Stellventils sowie die zur Vorspannung verwendeten Federn individuell angepasst werden. Zudem können der Ventilsignatur Toleranzen hinzugefügt werden, die an den vorliegenden Anwendungsfall angepasst werden können, um Falschmeldungen zu vermeiden.

Die Ventilsignatur kann zudem in regelmäßigen Intervallen aktualisiert werden. Die Aktualisierung kann unter anderem im laufenden Betrieb erfolgen oder im Rahmen eines Wartungszyklus. Dadurch können Verschleiß und Verschmutzung des Ventils, des Ventilglieds, des Antriebs, insbesondere der Dichtungen, in das vorgeschlagene Verfahren einbezogen werden. Das Verfahren kann damit zuverlässiger ausgestaltet werden.

Aus der Ventilsignatur wird eine Bruchsignatur abgeleitet, die es ermöglicht, jeder Ist-Position des Ventilglieds einen Bereich von Drücken zuzuordnen, die bei einem Bruch der Feder erreicht werden können. Dabei kann der Bruch der Feder dadurch ermittelt werden, dass der gemessene Ist-Druck einem der Drücke entspricht, die der gemessenen Ist- Position des Ventilglieds mithilfe der Bruchsignatur zugeordnet werden können.

Die Bruchsignatur umfasst die Drücke, die kleiner sind als jeder der Drücke, die einer Ist-Position des Ventilglieds mithilfe der Ventilsignatur zugeordnet werden können und positiv sind.

Die Bruchsignatur kann auch durch Multiplikation der Ventilsignatur mit einem Faktor berechnet werden, der den Bruch oder Ausfall der Feder simuliert. Wird der Antrieb z.B. mit n Federn vorgespannt, die gleich oder wenigstens vergleichbar sind, kann die Ventilsignatur mit dem Faktor

$$( n - 1 ) / n$$

multipliziert werden. Mögliche Überschneidungsbereiche mit der Ventilsignatur können dabei von der Bruchsignatur abgezogen werden. Zudem kann die Bruchsignatur - wie auch die Ventilsignatur - mit Toleranzen versehen werden, um Falschmeldungen zu vermeiden.

Die Bruchsignatur kann auch ausgehend von Mittelwerten berechnet werden. Zu jeder Ist-Position des Ventilglieds kann z.B. ein Mittelwert P der Drücke gebildet werden, die der Ist-Position des Ventilglieds mithilfe der Ventilsignatur zugeordnet werden können. Der entsprechende Druckbereich einer Bruchsignatur kann dann z.B. durch folgendes Intervall angegeben werden:

$$[ ( ( n - 1 ) / n ) P ( 1 - \delta ) - \varepsilon, ( ( n - 1 ) / n ) P ( 1 + \delta ) + \varepsilon],$$

wobei $\delta$ eine proportionale und $\epsilon$ eine konstante Breite der Signatur darstellen. Auf diese Weise können Messfehler, die z.B. proportional zum gemessenen Druck sind, sowie Reibungsverluste, die oft einen konstanten Beitrag zu einer Ventilsignatur liefern, modelliert und in das Verfahren einbezogen werden. Die Bruchsignatur kann auch um weitere Korrekturfaktoren ergänzt werden, um Störeinflüsse auf das Ventilglied, den Antrieb oder die Sensoren zu berücksichtigen. P kann zudem das arithmetische Mittel der Drücke darstellen oder durch eine andere Wichtung der Drücke berechnet werden.

Durch die Vorgabe einer Bruchsignatur kann die Zuverlässigkeit des Verfahrens erhöht und weiter an den vorliegenden Anwendungsfall angepasst werden. Umfasst die Vorspannung des Antriebs Federn, die unterschiedlich sind oder an unterschiedlichen Punkten des Antriebs angreifen, kann die Bruchsignatur für jede Feder individuell vorgegeben werden. Die Summe der Bruchsignaturen kann dabei disjunkte Bereiche umfassen. Auf diese Weise kann nicht nur der Bruch oder Ausfall einer Feder erkannt werden, sondern ggf. auch eine Aussage darüber getroffen werden, welche Feder und / oder in welchem Bereich des Antriebs eine Feder gebrochen ist.

Die Bruchsignatur kann Korrekturfaktoren enthalten. Mit derartigen Faktoren können zum Beispiel Änderungen oder Fehler beim Bestimmen der Kegelfläche, der Membranfläche des Antriebs, Fehler bei der Messung der Drücke oder der Positionen des Ventilglieds berücksichtigt werden.

Der Bruch oder Ausfall einer Feder löst in vielen Betriebssituationen eine spontane Bewegung des Ventilglieds entgegen der Federkräfte aus, mit denen der Antrieb vorgespannt wurde. Diese Bewegung weist charakteristische Eigenschaften auf, die zum Erkennen des Bruchs oder Ausfalls einer Feder im Rahmen des vorgeschlagenen Verfahrens genutzt werden können. Zu diesem Zweck kann die Ist-Position des Ventilglieds zu verschiedenen Zeitpunkten und der Ist-Druck in dem pneumatischen Antrieb zu den verschiedenen Zeitpunkten gemessen und aufgezeichnet werden. Der Bruch der Feder kann dabei dadurch ermittelt werden, dass die aufgezeichneten Ist-Positionen und Ist-Drücke dahingehend analysiert werden, ob eine spontane Bewegung des Ventilglieds entgegen der Federkraft aufgetreten ist, wobei die spontane Bewegung charakteristisch für die Bewegung des Ventilglieds unmittelbar nach dem Bruch der Feder ist.

Auf diese Weise lassen sich die Informationen nutzen, die bei der Regelung der Position des Ventilglieds ohnehin gewonnen werden. Die Zuverlässigkeit des Verfahrens kann zudem weiter erhöht werden.

Das Auftreten der spontanen Bewegung des Ventilglieds entgegen der Federkraft kann

im Rahmen des Verfahrens mithilfe der bei der spontanen Bewegung verstrichenen Zeit, der bei der spontanen Bewegung zurückgelegten Wegstrecke, der bei der spontanen Bewegung auftretenden maximalen Abweichung von einer Soll-Position, wobei der Antrieb so geregelt wird, dass die Ist-Position des Ventilglieds mit der Soll-Position übereinstimmt, der bei der spontanen Bewegung auftretenden Geschwindigkeiten und / oder Beschleunigungen, der bei der spontanen Bewegung überstrichenen Fläche in einem Hub-Druck-Diagramm und / oder eines vorgegebenen Bereichs von Positions- und Druckwerten, wobei der vorgegebene Bereich Bewegungsprofile des Ventilglieds beim Bruch der Feder umfasst, die durch Messung und / oder Berechnung gewonnen wurden, erkannt werden. Die überstrichene Fläche kann dabei bzgl. der Soll-Position des Ventilglieds gebildet werden.

Die spontane Bewegung wird maßgeblich durch die Art und Weise beeinflusst, wie die Position des Ventilglieds geregelt wird. In vielen Fällen kommt dabei ein Stellungsregler zum Einsatz. Die Funktion des Stellungsreglers kann jedoch auch von einem Teil der Leitwarte der Anlage übernommen werden. Einen weiteren maßgeblichen Einfluss hat die Druckluftversorgung des Antriebs, insbesondere der Druck, mit dem die Druckluft bereitgestellt wird.

Die Regelung wirkt der spontanen Bewegung des Ventilglieds nach dem Bruch oder Ausfall der Feder entgegen. Ohne Regelung würde sich die Position des Ventilglieds nach dem Bruch der Feder zu einem größeren Hub verschieben. Wird mithilfe des Positionssensors eine derartige Bewegung des Ventilglieds erkannt, wird der Antrieb in der Regel entlüftet, um das Ventilglied wieder in die Position zu verfahren, die der Regelung als Soll-Position vorgegeben ist.

Das Verfahren ermöglicht es, die unterschiedlichen Faktoren und damit einhergehenden Zeitskalen der Bewegung des Ventilglieds nach dem Bruch oder Ausfall der Feder zu berücksichtigen. Es kann auch an die Einbausituation des Antriebs und des Ventilglieds im Stellventil und der Einbausituation des Stellventils in der Anlage angepasst werden. Änderungen, z.B. durch Verschleiß oder Ablagerungen, können ebenfalls berücksichtigt werden.

Mustererkennungsmethoden und / oder Methoden des maschinellen Lernens können ebenfalls zum Einsatz gebracht werden, um die spontane Bewegung des Ventilglieds nach dem Bruch oder Ausfall der Feder zu erkennen.

Wird der Antrieb mit unterschiedlichen Federn vorgespannt, kann das Verfahren so eingerichtet werden, dass erkannt wird, welche der Federn gebrochen oder ausgefallen ist. Dies kann z.B. mithilfe von Bewegungsprofilen für jede dieser Federn erreicht werden.

Bei der Ermittlung des Bruchs der Feder können die aktuelle Betriebssituation und / oder Führungsgrößen des Stellventils berücksichtigt werden. Auf diese Weise lassen sich Bewegungen des Ventilglieds, die z.B. von der Leitwarte der Anlage vorgegeben werden und kurzfristig wieder geändert werden (z.B. aufgrund eines Störfalls) oder aufgrund des aktuellen Prozesses entstehen, von spontanen Bewegungen des Ventilglieds aufgrund des Bruchs oder Ausfalls der Feder unterscheiden. Wird der Bruch oder Ausfall der Feder mithilfe einer Bruchsignatur ermittelt, können diese Faktoren auch in die Bruchsignatur einbezogen werden.

Das Stellventil kann einen oder mehrere Sensoren zur Messung des Prozessmedi-ums- drucks aufweisen. Damit kann die Rückwirkung des Prozessmediums auf das Ventilglied und den Antrieb bestimmt werden und z.B. die vom Drucksensor des Antriebs gemessenen Druckwerte um den Mediumseinfluss korrigiert werden. So kann z.B. mithilfe von zwei Sensoren der Druckabfall innerhalb des Stellventils und die damit einhergehende Kraft bestimmt werden, die das Prozessmedium über das Ventilglied auf den Antrieb ausübt. Auf diese Weise lassen sich Fluktuationen im Prozessmediumsdruck, die zu einer spontanen Bewegung des Ventilglieds führen, erkennen.

Die Aufgabe wird zudem gelöst durch einen Stellungsregler, der Teil eines Stellventils mit einem vorgespannten Antrieb ist, wobei das Stellventil dazu bestimmt ist, Teil einer Anlage zu sein, auf der ein Prozess mit einem Prozessmedium abläuft. Das Stellventil weist dabei Folgendes auf:

- ein Ventilglied zur Beeinflussung des Prozessmediums und / oder des Prozesses, der auf der Anlage abläuft,
- einen pneumatischen Antrieb, der dazu eingerichtet ist, das Ventilglied zur Beeinflussung des Prozessmediums und / oder des Prozesses zu positionieren, wobei der pneumatische Antrieb die Feder aufweist, die den Antrieb vorspannt,
- einen Positionssensor zum Messen der Ist-Position des Ventilglieds und
- einen Drucksensor zum Messen des Ist-Drucks in dem pneumatischen Antrieb.

Der Stellungsregler umfasst dabei Mittel, die geeignet sind, die Schritte eines erfindungsgemäßen Verfahrens auszuführen.

Ein Computerprogramm, umfassend Befehle, die bewirken, dass der zuvor beschriebene Stellungsregler die Verfahrensschritte eines erfindungsgemäßen Verfahrens ausführt, löst ebenfalls die Aufgabe.

Die Aufgabe wird ferner gelöst durch einen Datenträger, auf dem das soeben beschriebene Computerprogramm gespeichert ist.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1 ein Stellventil mit einem vorgespannten Antrieb;
Fig. 2 einen Abschnitt eines Stellventils mit einem vorgespannten Antrieb;
Fig. 3 ein Hub-Druck-Diagramm mit einer Trajektorie;
Fig. 4 einen Ausschnitt aus dem Hub-Druck-Diagramm;
Fig. 5 einen Ausschnitt aus dem Hub-Druck-Diagramm mit einer anderen Darstellung der Trajektorie; und
Fig. 6 einen Ablaufplan eines erfindungsgemäßen Verfahrens.

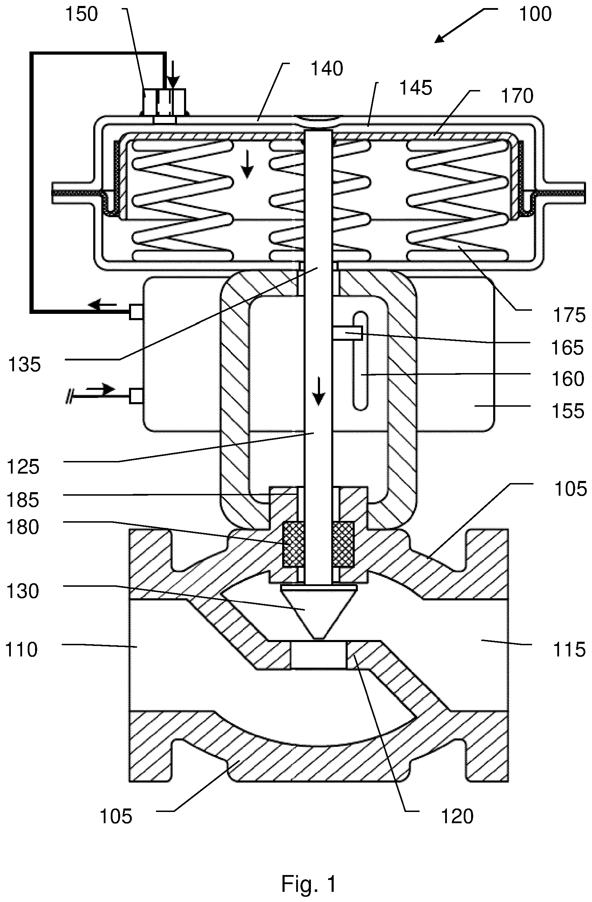

Fig. 1 zeigt ein "Air-to-Close" Stellventil 100 mit einem Ventilgehäuse 105. Das Ventilgehäuse 105 umfasst einen Einlass 110, einen Auslass 115, einen Ventilsitz 120 und ein Ventilglied 125 mit einem Ventilkegel 130. Mithilfe des Ventilkegels 130 bzw. des Ventilglieds 125 kann der Durchfluss eines Prozessmediums durch das Stellventil 100 kontrolliert bzw. gesteuert werden. Das Prozessmedium strömt dabei über den Einlass 110 in das Stellventil 100 und verlässt das Ventil 100 über die durch den Ventilsitz 120 und den Ventilkegel 130 gebildete Durchlassöffnung und den Auslass 115. Das Prozessmedium kann das Stellventil 100 auch in umgekehrter Richtung durchströmen.

Das Ventilglied 125 weist zudem eine Antriebs- oder Ventilstange 135 auf, wobei der Ventilkegel 130 am unteren Ende der Antriebs- oder Ventilstange 135 befestigt ist. Zum Schließen des Ventils 100 wird der Ventilkegel 130 mithilfe der Ventilstange 135 in Richtung des Ventilsitzes 120 verfahren. Zum Öffnen wird der Ventilkegel 130 bzw. das Ventilglied in die entgegengesetzte Richtung bewegt. Auf diese Weise kann die Größe der von dem Ventilsitz 120 und dem Ventilkegel 130 gebildeten Durchlassöffnung des Stellventils 100 vergrößert bzw. verkleinert und somit die Durchflussmenge eines fluiden Mediums bzw. Prozessmediums durch das Stellventil 100 kontrolliert werden.

Das Ventilglied 125 wird über eine Öffnung 185 in das Ventilgehäuse 105 geführt. Das Ventilgehäuse 105 verfügt über eine Packung 180, die in der Öffnung 185 angeordnet ist. Die Packung 180 dichtet das Ventilglied 125 zum Ventilgehäuse 105 hin fluiddicht ab.

Zum Verfahren des Ventilglieds 125 bzw. des Ventilkegels 130 verfügt das Stellventil 100 über einen pneumatischen Antrieb 140. Der pneumatische Antrieb weist eine Kammer 145 auf, die zum Verfahren des Ventilglieds 125 be- bzw. entlüftet wird. Der Druck der sich in der Kammer 145 befindlichen Luft wird mit einem Druckluftsensor 150 gemessen.

Der Antrieb 140 wird von einem Stellungsregler 155 gesteuert, der mit dem Druckluftsensor 150 verbunden ist, der in dem Antrieb 140 integriert ist. Der Stellungsregler 155 weist einen Positionssensor 160 zur Kontrolle der Bewegung des Ventilglieds 125 durch den Antrieb 140 auf. Der Positionssensor 160 ist im gezeigten Beispiel als Magnetsensor ausgebildet, der die Position eines Magneten 165 erfasst. Der Magnet 165 ist fest mit der Antriebsstange 135 verbunden. Die Position des Magneten 165 gibt damit die Position des Ventilglieds 125 an, zumindest im Rahmen des Betriebsbereichs des Ventils 100.

Der Antrieb 140 ist durch ein Federpaket 170 vorgespannt. In der schematisch dargestellten Anordnung hat das Federpaket 170 sechs Schraubenfedern 175, von denen drei vor und drei hinter der Schnittebene liegen. Die Schraubenfedern 175 sind Stahlfedern und parallel angeordnet, so dass sich die Federkonstante des Federpakets 170 durch die Summe der Federkonstanten der Federn 175 ergibt.

Das vorgeschlagene Verfahren wird im Betrieb des Ventils 100 vom Stellungsregler 155 ausgeführt. Es ist im Rahmen einer Diagnosefunktion implementiert, die parallel zur Regelung der Position des Ventilglieds 125 durch den Stellungsregler 155 ausgeführt wird. Dazu werden die bei der Regelung gemessenen und aufgezeichneten Positionen des Ventilglieds 125 sowie Drücke in der Kammer 145 des pneumatischen Antriebs 140 aufgezeichnet und analysiert. Auf diese Weise kann der Bruch oder Ausfall einer der Federn 175 erkannt werden, und zwar bevor sich ein Gleichgewicht zwischen der Kraft, die durch die Druckluft in der Kammer 145 auf das Ventilglied ausgeübt wird, und der Kraft, die durch die verbliebenen bzw. nicht beschädigten Federn 175 auf das Ventilglied 125 ausgeübt wird, eingestellt hat.

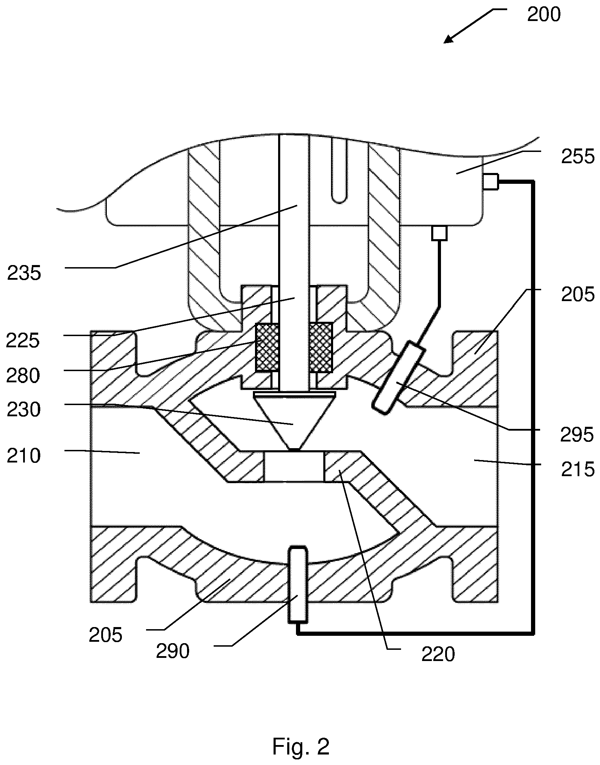

Fig. 2 zeigt einen Ausschnitt eines Stellventils 200, das nahezu baugleich zum Stellventil 100 ist. Es verfügt ebenfalls über ein Ventilgehäuse 205, einen Einlass 210, einen Auslass 215, einen Ventilsitz 220 und ein Ventilglied 225 zum Öffnen oder Schließen des Ventils 200, wobei das Ventilglied 225 aus einem Ventilkegel 230 und einer Ventil- bzw. Antriebsstange 235 besteht und mit einer Packung 280 zum Ventilgehäuse 205 hin abgedichtet wird. Die Position des Ventilglieds 225 wird ebenfalls mithilfe eines Stellungsreglers 255, eines Antriebs (nicht gezeigt), der zu diesem Zweck vom Stellungsregler 255 angesteuert wird, und eines Positionssensors 260 geregelt. Der Antrieb des Stellventils 200 kann beispielsweise mit drei Federn vorgespannt sein. Das Stellventil 200 weist zwei weitere Drucksensoren 290 und 295 im Ventilgehäuse 205 auf, die mit dem Stellungsregel 255 verbunden sind. Mithilfe der Drucksensoren 290 und 295 kann der Prozessmediumsdruck vor bzw. nach dem Passieren des Ventilsitzes 220 gemessen werden.

Mithilfe der Sensoren 290 und 295 setzt der Stellungsregler 255 eine Ausbaustufe des vorgeschlagenen Verfahrens um, bei der die Prozessmediumsdrücke im Ventilgehäuse 205 einbezogen werden. Dazu wird mit dem Sensor 290 der Prozessmediumsdruck P1 an der Stelle des Sensors 290 bzw. auf der dem Einlass 210 zugewandten Seite des Ventilsitzes 220 bzw. Ventilkegels 230 bestimmt. Entsprechend wird mithilfe des Sensors 295 der Prozessmediumsdruck P2 an der Stelle des Sensors 295 bzw. auf der dem Auslass 215 zugewandten Seite des Ventilsitzes 220 bzw. Ventilkegels 230 bestimmt. Mit den Drücken P1 und P2 können die Kräfte berechnet oder zumindest abgeschätzt werden, die das Prozessmedium auf den Ventilkegel 230, die Ventilstange 235 bzw. das Ventilglied 225 ausübt. Diese Kräfte führen u.a. zu einer Verschiebung der Ventilsignatur. Diese Verschiebung ist in der Regel vom laufenden Prozess abhängig. Sie wird in der Ausbaustufe des vorgeschlagenen Verfahrens zur Korrektur der gemessenen Ist-Drücke in dem pneumatischen Antrieb des Stellventils 200 genutzt.

Auf diese Weise lassen sich Falschmeldungen aufgrund von prozessabhängigen Kräften auf das Ventilglied 225 vermeiden, die in ihrer Wirkung auf die gemessenen Ist-Drücke ähnlich zu den Kräften bei einem Federbruch sind. Mit derartigen Korrekturen können auch spontane Bewegungen des Ventilglieds 225 aufgrund von Prozessmediumsfluktuationen erkannt und von spontanen Bewegungen des Ventilglieds 225 aufgrund des Bruchs einer der Federn unterschieden werden. Zudem kann die Ventilsignatur dynamisch an die Betriebssituation des Stellventils 200 angepasst werden. Das gleiche gilt für die Bruchsignatur, die zusätzlich vom Stellungsregler bei der Durchführung des Verfahrens berücksichtigt wird. Darüber hinaus kann die Sensitivität des Verfahrens erhöht werden, da prozessabhängige Verschiebungen der Ventil- bzw. Bruchsignatur zu höheren Drücken in dem pneumatischen Antrieb erkannt und somit Ist-Drücke einem Federbruch zugeordnet werden können, die ohne Korrektur innerhalb der Ventilsignatur oder oberhalb der Bruchsignatur liegen und damit nicht einem Federbruch zugeordnet würden.

Der Stellungsregler 255 kann zu diesem Zweck mit einem Korrekturmodell ausgestattet werden, das mit den Druckwerten der Sensoren 290 und 295 eine Approximation für die aus dem Medium auf den Ventilantrieb zurückwirkende Störkraft berechnet. Diese Berechnung ermöglicht es beispielweise, die Überprüfung bestimmter Merkmale zu unterdrücken. Dies würde unzutreffende Hinweise auf einen Ausfall vermeiden, zugleich aber die Anzahl der zur Verfügung stehenden Merkmale bzw. Indikatoren reduzieren. Soweit möglich ist daher eine Anpassung der Merkmale, wie z.B. der Ventil- oder Bruchsignatur, an eine Änderung des Prozessmediumsdrucks oder der Prozessmediumsdrücke in Betracht zu ziehen.

Die Kräfte des Prozessmediums auf den Ventilkegel 230 bzw. das Ventilglied 225 lassen sich zu diesem Zweck z.B. auf zwei Hauptbeiträge reduzieren, die sich mithilfe der Fläche A1 der Projektion des Ventilkegels 230 auf die Ebene des Ventilsitzes 220 und der Fläche A2, die der Differenz der Fläche A1 und der Querschnittsfläche der Ventilstange 235 entspricht, berechnen bzw. abschätzen lassen. Die Störkraft, die das Prozessmedium auf den Ventilkegel 230, die Ventilstange 235 bzw. das Ventilglied 225 ausübt, kann dann mit dem Differenzenvektor

$$( P1 \cdot A1 - P2 \cdot A2 ) \cdot e$$

angegeben bzw. abgeschätzt werden, wobei e einen Einheitsvektor darstellt, der parallel zu der Ventilstange 235 verläuft und in Richtung des Antriebs des Stellventils 200 zeigt.

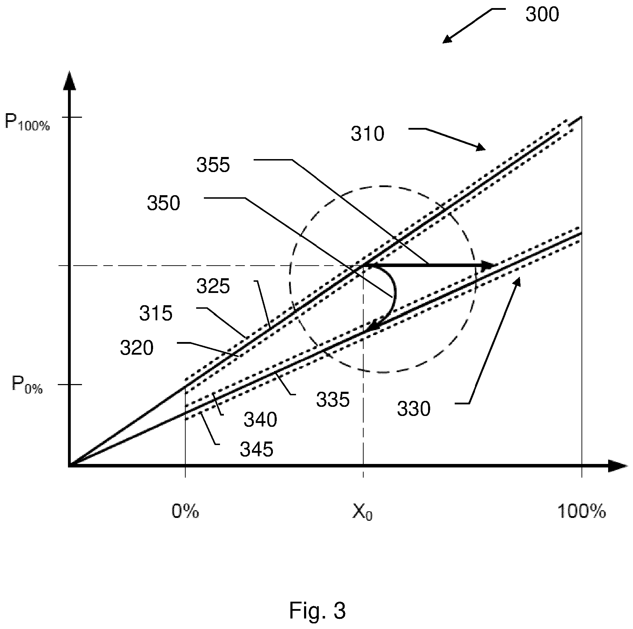

Fig. 3 zeigt ein Hub-Druck-Diagramm 300. Das Hub-Druck-Diagramm 300 umfasst den Betriebsbereich des Ventils 200, der sich von der Offenstellung (Hub = 0 %, Druck = Po %) bis hin zur Schließstellung (Hub = 100 %, Druck = P o%) erstreckt, sowie eine Soll-Position Xo des Ventilglieds 225. Der Stellungsregler 255 regelt den pneumatischen Antrieb des Stellventils 200, so dass die Ist-Position des Ventilglieds 225 mit der Soll-Position Xo übereinstimmt. Das Ventilglied 225 bewegt sich dabei in dem Diagramm 300 innerhalb einer Ventilsignatur 310. Mithilfe der Ventilsignatur 310 kann jeder Ist-Position des Ventilglieds 225 ein Bereich von Drücken zugeordnet werden, die beim Betrieb des Stellventils 200 mit einem unbeschädigten Federpaket erreicht werden können. Die Ventilsignatur 310 umfasst eine Belüftungskurve 315 und eine Entlüftungskurve 320. Die Belüftungskurve 315 definiert den höchsten Druck, der einer Ist-Position des Ventilglieds 225 mithilfe der Ventilsignatur 310 zugeordnet werden kann. Die Entlüftungskurve 320 definiert den niedrigsten Druck, der einer Ist-Position des Ventilglieds 225 mithilfe der Ventilsignatur 310 zugeordnet werden kann. Die Differenz der Kurven 315 und 320 ist ein Maß für die Reibung, die beim Bewegen des Ventilgliedes 225 z.B. entlang der Packung 280 auftritt.

Fig. 3 zeigt zudem eine Mittelwertkurve 325. Die Mittelwertkurve 325 stellt das arithmetische Mittel der Belüftungskurve 315 und der Entlüftungskurve 320 dar. Die Mittelwertkurve 325 wurde genutzt, um eine Bruchsignatur 330 mit Mittelwertkurve 335 abzuleiten. Dazu wurde die Kurve 325 mit dem Faktor

$$( 3 - 1 ) / (3)$$

skaliert, um die Mittelwertkurve 335 der Bruchsignatur 330 zu berechnen. Anschließend wurde die Differenz zwischen der Mittelwertkurve 325 und der Belüftungskurve 315 zur Mittelwertkurve 335 addiert, um eine obere Begrenzungskurve 340 der Bruchsignatur 330 zu hohen Drücken hin zu definieren. Die Differenz zwischen der Mittelwertkurve 325 und der Entlüftungskurve 315 wurde entsprechend von der Mittelwertkurve 335 subtrahiert, um eine untere Begrenzungskurve 345 der Bruchsignatur 330 zu niedrigen Drücken hin zu definieren.

Liegt bei einer Messung der Ist-Position und des Ist-Drucks das zugehörige Wertepaar innerhalb der Bruchsignatur 330, d.h. zwischen der oberen Begrenzungskurve 340 und unteren Begrenzungskurve 345, kann von einem Bruch einer der drei Federn des vorgespannten Antriebs des Stellventils 200 ausgegangen werden.

Der Bruch einer der drei Federn des vorgespannten Antriebs des Stellventils 200 führt zu einer Auslenkung des Ventilglieds 225, die vom Stellungsregler 255 erfasst wird. Der Stellungsregler 255 regelt daraufhin den pneumatischen Antrieb des Ventils 200, um das Ventilglied 225 wieder zurück zur Ausgangs- bzw. Soll-Position Xo zu bewegen. Das Diagramm 300 zeigt eine Trajektorie 350, die eine mögliche Bewegung des Ventilglieds 225 nach dem Bruch einer der drei Federn des Stellventils 200 darstellt.

Des Weiteren zeigt Fig. 3 eine Trajektorie 355. Die Trajektorie 355 stellt das Verhalten des Ventilglieds 225 ohne eine Nachregelung des Stellungsreglers 255 dar.

Im laufenden Betrieb des Stellventils 200 wird regelmäßig die Position des Ventilglieds 225 vom Stellungsregler 255 kontrolliert und im Rahmen der Diagnosefunktion überprüft, ob einer der gemessenen Ist-Drücke zusammen mit der Ist-Position des Ventilglieds 225 innerhalb der Bruchsignatur 330 liegt. Ist das der Fall, gibt der Stellungsregler 225 eine Meldung bzw. Warnung an die Leitwarte der Anlage aus, dass eine der drei Federn des vorgespannten Antriebs ausgefallen ist.

Fig. 3 zeigt exemplarisch, dass die Änderung im Betriebsverhalten des Antriebs bzw. Aktuators des Stellventils 200 aufgrund des Ausfalls einer Feder vereinfachend als Wechsel von einem ersten Kennlinienbündel (Ventilsignatur 310) auf ein zweites Kennlinienbündel (Bruchsignatur 330) verstanden werden kann. Dabei umfasst jedes der Kennlinienbündel drei Hub- Druck-Kurven Kennlinien (z.B. die Kennlinien 315, 320 und 325 der Ventilsignatur 310 oder die Kennlinien 335, 340 und 345 der Bruchsignatur 330), die zusammengenommen von der Literatur ebenfalls als Signatur des Aktuator-Ventil-Systems bezeichnet werden.

Die Mittelwertkurve 325 kann als ideale Kennlinie aufgefasst werden. Diese Kennlinie entspricht dem Gleichgewicht aus Druckkraft und Federkraft. Wegen der Reibung wird die ideale Kennlinie in der Praxis in manchen Situationen erkennbar verlassen. Beispielsweise läuft das Ventilglied 225 in der ungeregelten Fahrt von 0% nach 100% effektiv auf der oberhalb der idealen Kennlinie parallel verlaufenden gestrichelten realen Vorwärtskennlinie 315. Dort ist die effektiv auf das Federpaket wirkende Kraft durch die Reibung verringert. Die Bewegung bleibt hinter der idealen Situation ohne Reibung zurück. Bei der Fahrt in die Gegenrichtung läuft das Ventilglied 225 auf der unterhalb der idealen Kennlinie liegenden gleichfalls gestrichelt angelegten Rückwärtskennlinie 320. Der exemplarisch eingetragene gleich große Parallelversatz zwischen den drei erläuterten Kennlinien entspricht einer vereinfachenden Annahme einer konstanten Reibung. Die Reibung kann von der Richtung, der Position und anderen Umständen abhängen. Zum Beispiel kann die Packung 280 in bestimmten Ventilpositionsbereichen eingelaufen sein und somit eine geringere Reibung auf das Ventilglied 225 ausüben.

EP 4 193 083 B1

Die Regelungsstrategie des Stellungsreglers 255 kann dazu eingerichtet sein, das Ventilglied 225 auf eine vorgegebene Zielposition Xo einzustellen, wie dies in der exemplarischen Skizze der Fig. 3 eingetragen ist. Der zur Zielposition Xo gehörende Betriebspunkt des Ventilglieds 225 kann prinzipiell innerhalb des Streifens zwischen Vorwärts-315 und Rückwärtskennlinie 320 im Hub-Druck-Diagramm 300 liegen.

Ein Betriebspunkt auf der idealen Kennlinie wird häufig als bevorzugt angesehen, insbesondere bei symmetrischen Störkräften, die das Ventilglied 225 von der Soll-Position Xo wegbewegen. In diesem Fall wären die zum Ausbrechen aus der Zielposition erforderlichen Kräfte in beide Richtungen ungefähr gleich der Haftreibungskraft. Eine Zielposition in der Nähe der Vorwärts-315 oder Rückwärtskennlinie 320 könnte als robuster gegenüber einseitigen Störkräften angesehen werden, weil dort zum Ausbrechen aus der Zielposition in einer Richtung zusätzlich zu der Haftreibungskraft die Vorspannung des Aktuators zu überwinden ist. Die in dieser Anmeldung erläuterten Verfahren sind von der Lage des bevorzugten Betriebspunkts generell unabhängig.

Der vorliegend betrachtete Defekt des Ausfalls einer Feder im Federsatz des Aktuators kann als Änderung in dessen Kennlinienbündel aufgefasst werden. An die Stelle des vormaligen Kennlinienbündels 310 tritt ein im Diagramm 300 unterhalb liegendes Kennlinienbündel 330. Das Kennlinienbündel 330 wird wegen der verringerten Federkonstante des Federsatzes einen flacheren Verlauf erkennen lassen. In der exemplarischen Situation wurde der Ausfall einer Feder in einem Satz aus drei identisch konfigurierten Federn unterstellt. Dementsprechend wurde in der Darstellung die Steigung der idealen Kennlinie 335 im Kennlinienbündel 330 auf 2/3 der Steigung der idealen Kennlinie 325 im Kennlinienbündel 310 festgelegt. Zudem wurde unterstellt, dass die Reibungskräfte durch den Ausfall der Feder nicht beeinflusst sind. Das kann in praktischen Situationen anders sein. Insbesondere könnte sich durch den Ausfall einer Feder eine im Verhältnis zur Schubstange 235 außermittige Gesamtkraft ergeben mit einem Einfluss auf die Reibung in deren Führung oder der Packung 280.

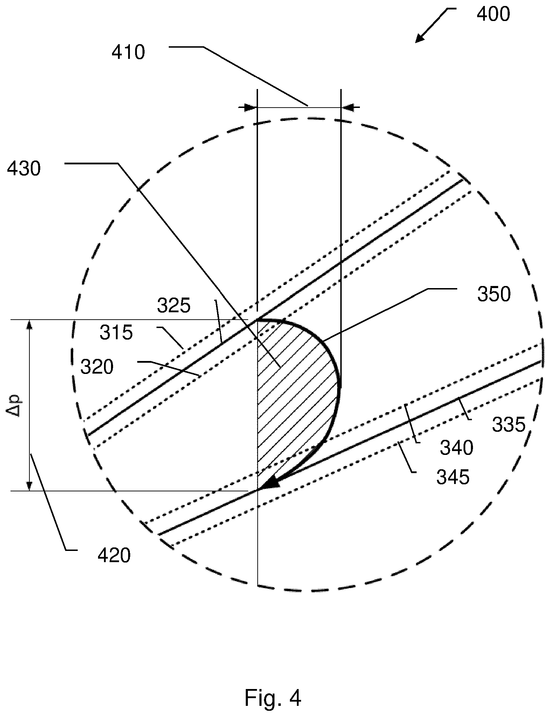

Fig. 4 zeigt einen Ausschnitt 400 des Hub-Druck-Diagramms 300. Darin sind drei Kenngrößen eingezeichnet, die zur Charakterisierung der Trajektorie 350 bzw. der zugehörigen spontanen Bewegung des Ventilglieds 225 entgegen der Federkraft herangezogen werden können. Dazu gehört

- eine maximale Abweichung 410,

- eine Druckdifferenz 420 und

- eine überstrichene Fläche 430.

Die maximale Abweichung 410 stellt die maximale Differenz zwischen der Soll-Position Xo und den Positionen dar, die das Ventilglied 225 entlang der Trajektorie 350 einnimmt.

Die Druckdifferenz 420 stellt die Differenz der Drücke dar, die vor und nach dem Bruch einer der drei Federn des Stellventils 200 nötig waren, um das Ventilglied bei Xo (s. Fig. 3) zu positionieren.

Die überstrichene Fläche 430 ist die Fläche zwischen der Trajektorie 350 und einer geraden Linie vom Startpunkt zum Endpunkt der Trajektorie 350.

Werte für diese Kenngrößen wurden mithilfe von Simulationen des Bruchs einer der drei Federn des Stellventils 200 bestimmt und bei der Installation mithilfe einer Eingabemaske in einer Speichereinheit des Stellungsreglers 255 hinterlegt. Die Werte können im Rahmen der Ausbaustufe des Verfahrens, das der Stellungsregler 255 zum Erkennen des Bruchs einer der Federn in dem vorgespannten Antrieb des Stellventils 200 ausführt, abgeprüft werden. Wird eine Bewegung des Ventilglieds aufgezeichnet und liegt eine Übereinstimmung mit allen oder einem überwiegenden Teil der hinterlegten Werte vor, kann von einem Bruch einer der Federn ausgegangen werden. Der Stellungsregler gibt in diesem Fall eine entsprechende Warnmeldung aus. Die Funktion des Stellventils 200 sollte daraufhin geprüft werden und das ggf. defekte Federpaket Instand gesetzt oder ausgetauscht werden.

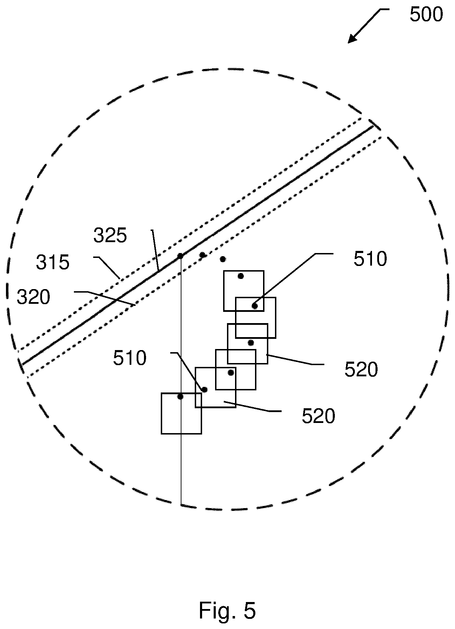

Fig. 5 zeigt einen Ausschnitt 500 des Hub-Druck-Diagramms 300, der denselben Umfang wie der Ausschnitt 400 hat. Darin sind einzelne Messpunkte 510 dargestellt. Mit den Messpunkten 510 wurde die Trajektorie 350 gebildet. Zudem sind Fenster 520 eingezeichnet. Die Fenster 520 ergeben einen positionsabhängigen Bereich von Positions- und Druckwerten.

Der mit den Fenstern 520 gebildete Bereich umfasst mögliche Bewegungsprofile des Ventilglieds beim Bruch einer der Federn. Die Fenster wurden - wie die Werte für die Kenngrößen 410, 420 und 430 durch Simulation bzw. Approximationsrechnung bestimmt und bei der Installation mithilfe einer Eingabemaske in einer Speichereinheit des Stellungsreglers 255 hinterlegt. Im Rahmen der Ausbaustufe des Verfahrens, das der Stellungsregler 255 zum Erkennen des Bruchs einer der Federn in dem vorgespannten Antrieb des Stellventils 200 ausführt, kann abgeprüft werden, ob bei einer Bewegung des Ventilglieds die aufgezeichneten Messpunkte innerhalb der Fenster 520 liegen. Ist das der Fall, stellt dies ein starkes Indiz dafür dar, dass eine der Federn gebrochen oder ausgefallen ist. Darüber hinaus kann festgestellt werden, wieviele der Messpunkte in einem Fenster 520 liegen. Die Anzahl der Messpunkte, die in den Fenstern 520 liegen, kann ebenfalls zum Erkennen eines Bruchs einer der Federn herangezogen werden und z.B. als Histogramm aufgezeichnet, analysiert und abgespeichert werden.

Die Fenster 520 können auch durch Messung bestimmt werden. Eine exemplarische Messung könnte an einem Stellventil ausgeführt werden, dessen Federsatz um eine Feder reduziert wurde. Bei identisch spezifizierten Federn hängt das Ergebnis nicht wesentlich von der Auswahl der Feder ab. Die direkte Messung wird zunächst die obere Begrenzungskurve 340 und untere Begrenzungskurve 345 der Bruchsignatur 330 aufdecken. Die ideale Kennlinie 335 kann unter der Annahme einer richtungsunabhängigen Reibung durch die Bildung des Mittelwerts approximiert werden. Die Kenntnis der idealen Kennlinie 335 ist in der vorliegenden exemplarischen Situation allerdings nicht erforderlich.

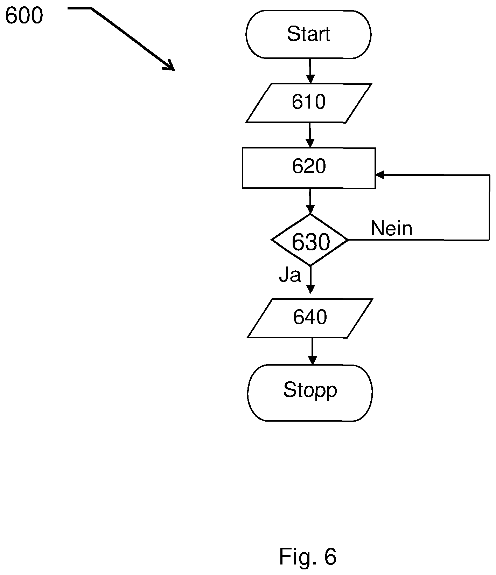

Fig. 6 zeigt einen Ablaufplan einer bevorzugten Ausführungsform eines erfindungsgemäßen Verfahrens 600. Das Verfahren beginnt mit Schritt 610, in dem u.a. die Verfahrensparameter wie z.B. die Ventilsignatur vorgegeben werden. In Schritt 620 werden der Ist-Druck und die Ist-Position des Ventilglieds zu einem Zeitpunkt gemessen. In Schritt 630 wird anhand des gemessenen Ist-Drucks und der gemessenen Ist-Position entschieden, wie das Verfahren fortgesetzt wird. Wurde kein Federbruch erkannt, wird das Verfahren mit Schritt 620 fortgesetzt. Wurde anhand der gemessenen Werte ein Federbruch festgestellt, wird in Schritt 640 eine Warn- bzw. Fehlermeldung ausgegeben und das Verfahren beendet. Das Verfahren kann als Diagnosefunktion ausgeführt werden, die z.B. im Stellungsregler eines Stellventils oder der Leitwarte einer Anlage implementiert ist. Solange kein Federbruch erkannt und das Verfahren beendet wurde, werden der Ist-Druck des pneumatischen Antriebs und die Ist-Position des Ventilglieds regelmäßig bestimmt. Dies kann z.B. mit einer festen Rate von 5 Hz, 10 Hz, 100 Hz, 200 Hz oder 500 Hz erfolgen. Wird der Bruch einer Feder erkannt, kann der Antrieb des Stellventils entlüftet werden. Die noch vorhandenen Federkräfte verfahren daraufhin das Ventilglied in eine Sicherheitsstellung. Auf diese Weise kann dem Bruch weiterer Federn bzw. dem Ausfall des Stellventils vorgebeugt werden.

Glossar

Anlage

Eine Anlage stellt eine planvolle Zusammenstellung von technischen Komponenten dar. Die Komponenten können Maschinen, Geräte, Apparate, Speicher, Leitungen bzw. Transportstrecken und / oder Steuer- bzw. Regelelemente umfassen. Sie können funktional, steuerungstechnisch und / oder sicherheitstechnisch miteinander verbunden, verschaltet bzw. verknüpft sein.

Anlagen werden in vielen unterschiedlichen Bereichen zu vielfältigen Zwecken betrieben. Dazu gehören beispielsweise verfahrens- oder prozesstechnische Anlagen, die in vielen Fällen der chemischen Industrie zuzurechnen sind. Der Begriff der Anlagen umfasst ebenfalls Raffinerien, Fernwärmesysteme, geo- oder solarthermische Anlagen, Anlagen zur Lebensmittelproduktion, Frischwasserversorgung oder Abwasserentsorgung, Biogasanlagen, etc.

Antrieb bzw. Aktuator

Ein Antrieb oder Aktuator ist eine Einheit, die ein Signal bzw. eine Signalfolge, z.B. von einem Stellungsregler oder Steuerungscomputer, in mechanische Bewegungen bzw. Veränderungen physikalischer Größen wie Druck oder Temperatur umsetzt. Antriebe oder Aktuatoren eignen sich damit zum Steuern oder Regulieren, z.B. eines Prozesses einer verfahrenstechnischen Anlage. Das Signal oder die Signalfolge wird meist elektrisch oder funktechnisch übertragen und kann analog oder digital ausgestaltet sein. Ein Antrieb kann ein elektrischer oder fluidischer Antrieb sein, wobei fluidische Antriebe entweder hydraulisch oder mit Druckluft betrieben werden können.

Eingabemaske

Eine Eingabemaske ist eine grafische Benutzeroberfläche oder Benutzerschnittstelle, mit der Anwendungssoftware mittels grafischer Symbole oder Steuerelemente bedient werden kann. Sie dient unter anderem dazu, Parameter und / oder Daten in die Recheneinheit einzuspeisen, die die Anwendungssoftware ausführt, und so der Anwendungssoftware zur Verfügung zu stellen. Die Bedienung geschieht z.B. mittels einer Maus als Steuergerät, mit der die grafischen Elemente bedient oder ausgewählt werden, bei Smartphones, Tablets und Kiosksystemen in der Regel durch Berührung eines Sensorbildschirms. Die Eingabe von Parametern kann über ein entsprechendes Bedienfeld oder eine Tastatur erfolgen. Daten können über entsprechende Datenträger wie CD oder DVD oder USB-Sticks zur Verfügung gestellt werden. Eine Eingabemaske kann auch über ein Web-Interface realisiert werden. Dabei können die einzuspeisenden Parameter und / oder Daten über eine Netzwerkverbindung eingespeist werden.

Ein Stellungsregler kann eine Eingabemaske aufweisen, um z.B. eine Ventilsignatur, einen (Betriebs-)Parameter oder eine andere Kenngröße vor- oder einzugeben. Die Eingabemaske kann auch dazu verwendet werden, einen Kalibrierungszyklus oder -schritt zu starten oder aufzurufen, um eine Ventilsignatur, einen (Betriebs-) Parameter oder eine andere Kenngröße aufzunehmen, aufzuzeichnen oder zu bestimmen.

Federpaket

Ein Federpaket umfasst mehrere Federn, die so angeordnet und miteinander verbunden sind, dass die Federn Zusammenwirken können. Die Federn können dabei parallel zueinander angeordnet sein, so dass sich die Federkonstante des Federpakets aus der Summe der Federkonstanten der einzelnen Federn ergibt. Ein Federpaket kann aus identischen oder unterschiedlichen Federn aufgebaut sein, wobei sich die Federn in ihrer Federkonstante, den bei der Herstellung der Federn verwendeten Materialien, ihrer Bauart oder - bei Schraubenfedern - der Anzahl der Windungen unterscheiden. Mit Federpaketen können z.B. Antriebe für Stellventile vorgespannt werden.

Feder

Eine Feder ist ein technisches Bauteil, das sich im praktischen Gebrauch ausreichend elastisch verformen lässt. Federn sind häufig als Schraubenfedern ausgebildet. Schraubenfedern stellen einen in Schraubenform gewickelten oder gewundenen Draht dar. Sie werden in Richtung der Schraubenachse auseinandergezogen (Zugfedern) oder zusammengedrückt (Druckfedern). Andere Ausführungsformen von Federn betreffen Luftfedern oder elastische (Gel-)Kissen.

Gleichgewicht

Ein Gleichgewicht ist ein Zustand eines Körpers (z.B. eines Ventilgliedes), in dem der Körper keine Beschleunigung erfährt. Er verharrt folglich in Ruhe oder bewegt sich mit konstanter Geschwindigkeit. Ein Körper befindet sich im mechanischen Gleichgewicht, wenn sich sämtliche Kräfte, die auf ihn wirken, im Gleichgewicht befinden, d.h. die Vektorsumme der Kräfte gleich null ist.

Hub

Ein Hub eines Ventilglieds bezeichnet die Strecke, die das Ventilglied zurücklegt, wenn es von einer ersten Position zu einer zweiten Position verfahren wird.

Ist- Druck

Ein Ist-Druck stellt den Druck - beispielsweise in einer abgeschlossenen Kammer oder an einer bestimmten (flächig ausgedehnten) Stelle - zu einem bestimmten Zeitpunkt dar. Der Ist-Druck ist ein Maß für die Kraft, die ein Medium auf die Wandungen der abgeschlossenen Kammer oder die Fläche der bestimmten Stelle zu dem bestimmten Zeitpunkt ausübt. In vielen Fällen wird der Ist-Druck mit dem momentan vorherrschenden Druck bzw. den entsprechenden Kräften gleichgesetzt, die zum gegenwärtigen Zeitpunkt auf die Wandungen einer Kammer oder die Fläche einer Stelle einwirken. Der bestimmte Zeitpunkt kann sich aber auch auf einen Zeitpunkt sowohl in der Vergangenheit oder Zukunft beziehen.

Ist-Position

Eine Ist-Position stellt die Position und / oder Lage eines Körpers im Raum zu einem bestimmten Zeitpunkt dar. In vielen Fällen wird die Ist-Position eines Körpers mit seiner momentanen Position bzw. Lage gleichgesetzt, d.h. mit der Position bzw. Lage, die der Körper zum gegenwärtigen Zeitpunkt einnimmt. Der bestimmte Zeitpunkt kann sich aber auch auf einen Zeitpunkt sowohl in der Vergangenheit oder Zukunft beziehen. Eine Ist-Position ist häufig der Ausgangspunkt für eine zielgerichtete Bewegung eines Körpers hin zu einer Soll-Position.

Nicht-Gleichgewicht

Ein Nicht-Gleichgewicht ist ein Zustand eines Körpers (z.B. eines Ventilgliedes), in dem der Körper eine Beschleunigung erfährt. Er verharrt folglich nicht in Ruhe und bewegt sich nicht mit konstanter Geschwindigkeit. Ein Körper befindet sich in einem mechanischen Nicht-Gleichgewicht, wenn sich sämtliche Kräfte, die auf ihn wirken, im Nicht-Gleichgewicht befinden, d.h. die Vektorsumme der Kräfte ungleich null ist.

Prozess

Ein (technischer) Prozess ist die Gesamtheit der Vorgänge in einer (technischen) Anlage. Ein laufender Prozess ist ein Prozess, der gerade auf einer Anlage bzw. im Normalbetrieb einer Anlage gefahren wird. Ein Prozess kann kontinuierlich bzw. fortlaufend sein (Erdölraffinierung, Fernwärmeversorgung oder Stromerzeugung) oder diskontinuierlich bzw. ein Batch- oder Chargenprozess sein (Teigherstellung zur Produktion von Backwaren, Medikamentenherstellung, Rösten von Kaffee).

Prozessmedium

Ein Prozessmedium ist ein fluides Medium, das im Rahmen eines Prozesses innerhalb einer Anlage umgewälzt bzw. transportiert wird und dabei ggf. verändert wird. Prozessmedien können Öle, Salze, Flüssigkeiten oder Gase oder Gemische davon sein.

Stellungsregler

Ein Stellungsregler ist dasjenige Element eines Ventils, das das Ventilglied des Ventils zum Öffnen oder Schließen des Ventils betätigt bzw. steuert. Stellungsregler umfassen in vielen Fällen einen elektrischen oder einen fluidischen Antrieb oder sind damit verbunden.

Soll-Position

Eine Soll-Position stellt eine vorgegebene bzw. angestrebte Position bzw. Lage eines Körpers im Raum dar, von der die Ist-Position des Körpers so wenig wie möglich abweichen soll. Eine Soll-Position oder Soll-Lage ist in vielen Fällen das Ziel einer gerichteten Bewegung eines Körpers oder das durch die gerichtete Bewegung des Körpers angestrebte Endresultat. Im Idealfall stimmt zumindest als Ergebnis der zielgerichteten Bewegung eines Körpers die Ist-Position des Körpers mit der angestrebten Soll-Position überein oder weicht davon lediglich im Rahmen der mit der zielgerichteten Bewegung erreichbaren Positionierunsicherheit bzw. einer vorgegebenen Positionstoleranz ab.

Stellventil

Stellventile, auch Prozess- oder Regelventile genannt, dienen zur Drosselung bzw. Regelung fluidischer Ströme. Zu diesem Zweck wird ein Verschlussteil, z.B. ein Loch- oder Ventilkegel, relativ zu einem Ventilsitz mittels eines Antriebs bewegt. Dabei wird eine Durchflussöffnung freigegeben oder abgeschlossen, wodurch die Durchflussmenge beeinflusst werden kann, bis hin zum vollständigen Verschließen der Durchflussöffnung. Typischerweise wird hierzu ein pneumatischer oder elektrischer Antrieb verwendet.

Ventilglied

Ein Ventilglied ist dasjenige Element eines Ventils, das den Ventilsitz freigeben oder verschließen kann und z. B. von einem Stellungsregler betätigt wird, um das Ventil zu schließen bzw. zu öffnen. Es setzt sich regelmäßig aus einer Ventilstange und einem Ventilkegel zusammen, wobei letzterer am Ende der Ventilstange montiert ist.

Ventilsignatur

Eine Ventilsignatur stellt ein Bündel aus Hub-Druck-Kurven in einem Hub-Druck-Dia- gramm dar. Hub-Druck-Kurven sind Funktionen, mit denen einem Hub (z.B. eines Ventilglieds) ein Druck (z.B. eines pneumatischen Antriebs eines Stellventils) zugeordnet werden kann. Eine Ventilsignatur wird meist mithilfe einer Belüftungskurve und einer Entlüftungskurve definiert. Die Hub-Druck-Kurven einer Ventilsignatur liegen innerhalb des Bandes, das durch die Be- und Entlüftungskurve begrenzt wird. Diese fallen reibungsbedingt nicht zusammen und formen eine Hysterese. Die Definition einer Ventilsignatur kann durch Angabe einer Mittelwertkurve ergänzt werden.

Zeitpunkt

Ein Zeitpunkt ist ein genau bestimmter Moment in einem zeitlichen Bezugssystem. Er kann auf einer Zeitskala angegeben werden und besitzt - im Gegensatz zu einer Zeitspanne - keine Ausdehnung.

Bezugszeichen

100   Stellventil
105   Ventilgehäuse
110   Einlass

115   Auslass
120   Ventilsitz
125   Ventilglied
130   Ventilkegel
135   Antriebsstange
140   Antrieb
145   Kammer
150   Drucksensor
155   Stellungsregler
160   Positionssensor
165   Magnet
170   Federpaket
175   Feder
180   Packung
185   Öffnung

200   Stellventil
205   Ventilgehäuse
210   Einlass
215   Auslass
220   Ventilsitz
225   Ventilglied
230   Ventilkegel
235   Antriebsstange
255   Stellungsregler
280   Packung
290   Drucksensor

300   Hub-Druck-Diagramm
310   Ventilsignatur
315   Belüftungskurve
320   Entlüftungskurve
325   Mittelwertkurve
330   Bruchsignatur
335   Mittelwertkurve
340   obere Begrenzungskurve
345   untere Begrenzungskurve
350   Trajektorie
355   Trajektorie

400   Ausschnitt aus dem Hub-Druck-Diagramm 300
410   maximale Abweichung
420   Druckdifferenz
430   überstrichene Fläche

500   Ausschnitt aus dem Hub-Druck-Diagramm 300
510   Messpunkt
520   Fenster

600   Verfahren
610   Eingabe
620   Messung
630   Prüfung
640   Ausgaben einer Meldung

zitierte Literatur

zitierte Patentliteratur

US 4,976,144 A

WO 2004/074947 A1

DE 296 12 346 U1

WO 2009/111101 A1

zitierte Nicht-Patentliteratur

Ralph Herbrich: Stellventile, Oldenburg Industrieverlag, 2004, ISBN-13: 978-3486630558, Kapitel 3.5 "Ventildiagnose"

**Patentansprüche**

**1.**   Verfahren (600) zum Erkennen eines Bruchs einer Feder (175) in einem Stellventil (100; 200);

1.1 wobei das Stellventil (100; 200) dazu bestimmt ist, Teil einer Anlage zu sein, auf der ein Prozess mit einem Prozessmedium abläuft;
1.2 wobei das Stellventil (100; 200) Folgendes aufweist:

1.2.1 ein Ventilglied (125; 225) zur Beeinflussung des Prozessmediums und / oder des Prozesses, der auf der Anlage abläuft;
1.2.2 einen pneumatischen Antrieb (140), der dazu eingerichtet ist, das Ventilglied (125; 225) zur Beeinflussung des Prozessmediums und / oder des Prozesses zu positionieren;
1.2.2.1 wobei der pneumatische Antrieb (140) die Feder (175) aufweist;
1.2.2.2 wobei die Feder (175) den Antrieb (140) vorspannt;
1.2.3 einen Positionssensor (160) zum Messen der Ist-Position des Ventilglieds (125; 225); und
1.2.4 einen Drucksensor (150) zum Messen des Ist-Drucks in dem pneumatischen Antrieb (140);

wobei das Verfahren folgende Schritte umfasst:

1.3 Bestimmen oder Vorgeben (610) einer Ventilsignatur (310);
1.3.1 wobei die Ventilsignatur (310) es ermöglicht, jeder Ist-Position des Ventilglieds (125; 225) einen Bereich von Drücken zuzuordnen, die beim Betrieb des Stellventils (100; 200) mit einer unbeschädigten Feder (175) erreicht werden können;
1.3.2 Ableiten einer Bruchsignatur (330) aus der Ventilsignatur (310), die es ermöglicht, jeder Ist-Position des Ventilglieds einen Bereich von Drücken zuzuordnen, die bei einem Bruch der Feder erreicht werden können;
1.3.3 wobei die Bruchsignatur Drücke umfasst, die kleiner sind als jeder der Drücke, die einer Ist-Position des Ventilglieds mithilfe der Ventilsignatur zugeordnet werden können und positiv sind;
1.4 Messen (620) der Ist-Position des Ventilglieds (125; 225) mithilfe des Positionssensors (160) zu einem Zeitpunkt;
1.5 Messen (620) des Ist-Drucks in dem pneumatischen Antrieb (140) mithilfe des Drucksensors (150) zu dem Zeitpunkt;
1.6 Ermitteln (630), ob die Feder (175) gebrochen ist, wobei ein Bruch der Feder (175) dadurch ermittelt wird,
1.6.1 dass der gemessene Ist-Druck kleiner ist als jeder der Drücke, die der gemessenen Ist-Position des Ventilglieds (125; 225) mithilfe der Ventilsignatur (310) zugeordnet werden können und
1.6.1.1 einem der Drücke entspricht, die der gemessenen Ist-Position des Ventilglieds mithilfe der Bruchsignatur zugeordnet werden können; und / oder
1.6.2 dass die gemessene Ist-Position größer ist als jede der Positionen, die dem gemessenen Ist-Druck des Ventilglieds (125; 225) mithilfe der Ventilsignatur (310) zugeordnet werden können;
1.7 Ausgeben (640) einer Meldung, sofern ein Bruch der Feder (175) ermittelt wurde.

**2.** Verfahren (600) nach dem vorhergehenden Anspruch,
**dadurch gekennzeichnet,**
**dass** die Ventilsignatur (310) mithilfe einer Eingabemaske bestimmt oder vorgegeben wird.

**3.** Verfahren (600) nach einem der vorhergehenden Ansprüche,
**dadurch gekennzeichnet,**
**dass** die Ventilsignatur (310) in regelmäßigen Intervallen aktualisiert wird.

**4.** Verfahren (600) nach einem der vorhergehenden Ansprüche,
**dadurch gekennzeichnet,**

4.1 dass aus der Ventilsignatur (310) eine Bruchsignatur (330) abgeleitet wird;
4.1.1 wobei die Bruchsignatur (330) es ermöglicht, jeder Ist-Position des Ventilglieds (125; 225) einen Bereich von Drücken zuzuordnen, die bei einem Bruch der Feder (175) erreicht werden können;
4.2 wobei der Bruch der Feder (175) dadurch ermittelt wird, dass der gemessene Ist-Druck einem der Drücke entspricht, die der gemessenen Ist-Position des Ventilglieds (125; 225) mithilfe der Bruchsignatur (330) zugeordnet werden können.

**5.** Verfahren (600) nach einem der vorhergehenden Ansprüche,
**dadurch gekennzeichnet,**

5.1 dass zu verschiedenen Zeitpunkten die Ist-Position des Ventilglieds (125; 225) und
5.2 zu den verschiedenen Zeitpunkten der Ist-Druck in dem pneumatischen Antrieb (140) gemessen und aufgezeichnet wird;
5.3 wobei der Bruch der Feder (175) dadurch ermittelt wird, dass die aufgezeichneten Ist-Positionen und Ist-Drücke dahingehend analysiert werden, ob eine spontane Bewegung des Ventilglieds (125; 225) entgegen der Federkraft aufgetreten ist;
5.3.1 wobei die spontane Bewegung charakteristisch für die Bewegung des Ventilglieds (125; 225) unmittelbar nach dem Bruch der Feder (175) ist.

**6.** Verfahren (600) nach dem vorhergehenden Anspruch,
**dadurch gekennzeichnet,**
**dass** das Auftreten der spontanen Bewegung des Ventilglieds (125; 225) entgegen der Federkraft mithilfe

6.1 der bei der spontanen Bewegung verstrichenen Zeit und / oder
6.2 der bei der spontanen Bewegung zurückgelegten Wegstrecke und / oder
6.3 der bei der spontanen Bewegung auftretenden maximalen Abweichung von einer Soll-Position,
6.3.1 wobei der Antrieb (140) so geregelt wird, dass die Ist-Position des Ventilglieds (125; 225) mit der Soll-Position übereinstimmt, und / oder
6.4 den bei der spontanen Bewegung auftretenden Geschwindigkeiten und / oder Beschleunigungen und /oder
6.5 der bei der spontanen Bewegung überstrichenen Fläche in einem Hub-Druck-Diagramm und /oder
6.6 eines vorgegebenen Bereichs von Positions- und Druckwerten, wobei der vorgegebene Bereich Bewegungsprofile des Ventilglieds (125; 225) beim Bruch der Feder (175) umfasst,
6.6.1 wobei die Bewegungsprofile durch Messung und / oder Berechnung gewonnen wurden, erkannt wird.

**7.** Verfahren (600) nach einem der vorhergehenden Ansprüche,
**dadurch gekennzeichnet,**
**dass** bei der Ermittlung (630) des Bruchs der Feder (175) die aktuelle Betriebssituation und / oder Führungsgrößen des Stellventils (100; 200) berücksichtigt werden.

**8.** Verfahren (600) nach einem der vorhergehenden Ansprüche,
**dadurch gekennzeichnet,**
**dass** das Stellventil (100; 200) einen Sensor (290) oder mehrere Sensoren (290) zu Messung des Prozessmediumsdrucks aufweist.

**9.** Stellungsregler für ein Stellventil mit einem vorgespannten Antrieb (140),

9.1 wobei das Stellventil (100; 200) dazu bestimmt ist, Teil einer Anlage zu sein, auf der ein Prozess mit einem Prozessmedium abläuft;

9.2 wobei das Stellventil (100; 200) Folgendes aufweist:

9.2.1 ein Ventilglied (125; 225) zur Beeinflussung des Prozessmediums und / oder des Prozesses, der auf der Anlage abläuft;

9.2.2 einen pneumatischen Antrieb (140), der dazu eingerichtet ist, das Ventilglied (125; 225) zur Beeinflussung des Prozessmediums und / oder des Prozesses zu positionieren;

9.2.2.1 wobei der pneumatische Antrieb (140) die Feder (175) aufweist;

9.2.2.2 wobei die Feder (175) den Antrieb (140) vorspannt;

9.2.3 einen Positionssensor (160) zum Messen der Ist-Position des Ventilglieds (125; 225); und

9.2.4 einen Drucksensor (150) zum Messen des Ist-Drucks in dem pneumatischen Antrieb (140);

9.3 wobei der Stellungsregler Mittel aufweist, um die Schritte eines Verfahrens (600) nach einem der vorherhergehenden Verfahrensansprüche auszuführen.

10. Stellventil mit einem vorgespannten Antrieb (140), wobei das Stellventil einen Stellungsregler nach dem vorhergehenden Anspruch aufweist.

11. Prozesstechnische Anlage mit einem Stellventil nach dem vorhergehenden Anspruch.

12. Computerprogramm, umfassend Befehle, die bewirken, dass der Stellungsregler nach Anspruch 9 die Verfahrensschritte nach einem der vorhergehenden Verfahrensansprüche ausführt.

13. Datenträger, auf dem das Computerprogramm nach Anspruch 12 gespeichert ist.

**Claims**

1. Method (600) for detecting a breakage of a spring (175) in a control valve (100; 200);

1.1 wherein the control valve (100; 200) is intended to be part of a system on which a process with a process medium takes place;

1.2 wherein the control valve (100; 200) has the following:

1.2.1 a valve element (125; 225) for influencing the process medium and/or the process taking place on the system;

1.2.2 a pneumatic drive (140) configured to position the valve element (125; 225) to influence the process medium and/or the process;

1.2.2.1 wherein the pneumatic drive (140) comprises the spring (175);

1.2.2.2 wherein the spring (175) preloads the drive (140);

1.2.3 a position sensor (160) for measuring the actual position of the valve element (125; 225); and

1.2.4 a pressure sensor (150) for measuring the actual pressure in the pneumatic drive (140); wherein the method comprises the following steps:

1.3 determining or specifying (610) a valve signature (310);

1.3.1 wherein the valve signature (310) makes it possible to assign to each actual position of the valve element (125; 225) a range of pressures that can be reached when the control valve (100; 200) is operated with an undamaged spring (175);

1.3.2 deriving a breakage signature (330) from the valve signature (310) that makes it possible to assign to each actual position of the valve element a range of pressures that can be reached when the spring breaks;

1.3.3 wherein the breakage signature includes pressures that are less than any of the pressures that can be assigned to an actual position of the valve element using the valve signature and are positive;

1.4 measuring (620) the actual position of the valve element (125; 225) using the position sensor (160) at a point in time;

1.5 measuring (620) the actual pressure in the pneumatic drive (140) using the pressure sensor (150) at the point in time;

1.6 ascertaining (630) whether the spring (175) is broken, wherein a breakage of the spring (175) is ascertained by the fact that

1.6.1 the measured actual pressure is less than any of the pressures that can be assigned to the measured actual position of the valve element (125; 225) using the valve signature (310) and
1.6.1.1 corresponds to one of the pressures that can be assigned to the measured actual position of the valve element using the breakage signature; and/or
1.6.2 the measured actual position is greater than any of the positions that can be assigned to the measured actual pressure of the valve element (125; 225) using the valve signature (310);
1.7 issuing (640) a message if a breakage of the spring (175) has been ascertained.

**2.** Method (600) according to the preceding claim,
**characterized**
**in that** the valve signature (310) is determined or specified using an input mask.

**3.** Method (600) according to either of the preceding claims,
**characterized**
**in that** the valve signature (310) is updated at regular intervals.

**4.** Method (600) according to any of the preceding claims,
**characterized**

4.1 **in that** a breakage signature (330) is derived from the valve signature (310);
4.1.1 the breakage signature (330) making it possible to assign to each actual position of the valve element (125; 225) a range of pressures that can be reached when the spring (175) breaks;
4.2 the breakage of the spring (175) being ascertained by the fact that the measured actual pressure corresponds to one of the pressures that can be assigned to the measured actual position of the valve element (125; 225) using the breakage signature (330).

**5.** Method (600) according to any of the preceding claims,
**characterized**

5.1 **in that** at different points in time the actual position of the valve element (125; 225) and
5.2 at the different points in time the actual pressure in the pneumatic drive (140) is measured and recorded;
5.3 the breakage of the spring (175) being ascertained by analyzing the recorded actual positions and actual pressures to determine whether a spontaneous movement of the valve element (125; 225) against the spring force has occurred;
5.3.1 the spontaneous movement being characteristic of the movement of the valve element (125; 225) immediately after the breakage of the spring (175).

**6.** Method (600) according to the preceding claim,
**characterized**
**in that** the occurrence of the spontaneous movement of the valve element (125; 225) against the spring force is detected using

6.1 the time elapsed during the spontaneous movement and/or
6.2 the distance covered during the spontaneous movement and/or
6.3 the maximum deviation from a target position occurring during the spontaneous movement,
6.3.1 the drive (140) being controlled such that the actual position of the valve element (125; 225) corresponds to the target position, and/or
6.4 the velocities and/or accelerations occurring during the spontaneous movement and/or
6.5 the area swept during the spontaneous movement in a stroke-pressure diagram and/or
6.6 a specified range of position and pressure values, the specified range including movement profiles of the valve element (125; 225) when the spring (175) breaks,
6.6.1 the movement profiles having been obtained by measurement and/or calculation.

**7.** Method (600) according to any of the preceding claims,
**characterized**
**in that** when ascertaining (630) the breakage of the spring (175), the current operating situation and/or reference variables of the control valve (100; 200) are taken into account.

**8.** Method (600) according to any of the preceding claims,
**characterized**
**in that** the control valve (100; 200) has a sensor (290) or a plurality of sensors (290) for measuring the process medium pressure.

**9.** Position controller for a control valve comprising a preloaded drive (140),

9.1 wherein the control valve (100; 200) is intended to be part of a system on which a process with a process medium takes place;
9.2 wherein the control valve (100; 200) has the following:

9.2.1 a valve element (125; 225) for influencing the process medium and/or the process taking place on the system;
9.2.2 a pneumatic drive (140) designed to position the valve element (125; 225) to influence the process medium and/or the process;
9.2.2.1 wherein the pneumatic drive (140) comprises the spring (175);
9.2.2.2 wherein the spring (175) preloads the drive (140);
9.2.3 a position sensor (160) for measuring the actual position of the valve element (125; 225); and
9.2.4 a pressure sensor (150) for measuring the actual pressure in the pneumatic drive (140);
9.3 wherein the position controller has means to perform the steps of a method (600) according to any of the preceding method claims.

**10.** Control valve comprising a preloaded drive (140),
wherein the control valve has a position controller according to the preceding claim.

**11.** Process engineering system comprising a control valve according to the preceding claim.

**12.** Computer program comprising commands causing the position controller of claim 9 to carry out the method steps according to any of the preceding method claims.

**13.** Data carrier on which the computer program according to claim 12 is stored.

**Revendications**

**1.** Procédé (600) pour la détection de la rupture d'un ressort (175) dans une soupape de réglage (100 ; 200) ;

1.1 dans lequel la soupape de réglage (100 ; 200) est destinée à faire partie d'une installation sur laquelle se déroule un processus avec un fluide de processus ;
1.2 dans lequel la soupape de réglage (100 ; 200) présente les éléments suivants :

1.2.1 un organe de soupape (125 ; 225) permettant d'influencer le fluide de processus et/ou le processus qui se déroule sur l'installation ;
1.2.2 un entraînement (140) pneumatique qui est conçu pour positionner l'organe de soupape (125 ; 225) permettant d'influencer le fluide de processus et/ou le processus ;
1.2.2.1 dans lequel l'entraînement (140) pneumatique présente le ressort (175) ;
1.2.2.2 dans lequel le ressort (175) précontraint l'entraînement (140) ;
1.2.3 un capteur de position (160) pour la mesure de la position réelle de l'organe de soupape (125 ; 225) ; et
1.2.4 un capteur de pression (150) pour la mesure de la pression réelle dans l'entraînement (140) pneumatique ; dans lequel le procédé comprend les étapes suivantes :

1.3 détermination ou prédéfinition (610) d'une signature de soupape (310) ;
1.3.1 dans lequel la signature de soupape (310) permet d'associer à chaque position réelle de l'organe de soupape (125 ; 225) une plage de pressions qui peuvent être atteintes lors du fonctionnement de la soupape de réglage (100 ; 200) avec un ressort (175) non endommagé ;
1.3.2 dérivation, à partir de la signature de soupape (310), d'une signature de rupture (330) qui permet d'associer à chaque position réelle de l'organe de soupape une plage de pressions qui peuvent être atteintes lors de la rupture du ressort ;

1.3.3 dans lequel la signature de rupture comprend des pressions qui sont inférieures à chacune des pressions qui peuvent être associées à une position réelle de l'organe de soupape à l'aide de la signature de soupape et qui sont positives ;

1.4 mesure (620) de la position réelle de l'organe de soupape (125 ; 225) à l'aide du capteur de position (160) à un instant ;

1.5 mesure (620) de la pression réelle dans l'entraînement (140) pneumatique à l'aide du capteur de pression (150) à l'instant ;

1.6 détermination (630) du fait de savoir si le ressort (175) est rompu, dans lequel une rupture du ressort (175) est déterminée

1.6.1 par le fait que la pression réelle mesurée est inférieure à chacune des pressions qui peuvent être associées à la position réelle mesurée de l'organe de soupape (125 ; 225) à l'aide de la signature de soupape (310) et

1.6.1.1. correspond à l'une des pressions qui peuvent être associées à la position réelle mesurée de l'organe de soupape à l'aide de la signature de rupture ; et/ou

1.6.2 par le fait que la position réelle mesurée est supérieure à chacune des positions qui peuvent être associées à la pression réelle mesurée de l'organe de soupape (125 ; 225) à l'aide de la signature de soupape (310) ;

1.7 émission (640) d'un message si une rupture du ressort (175) a été déterminée.

2. Procédé (600) selon la revendication précédente,
**caractérisé en ce**
**que** la signature de soupape (310) est spécifiée ou prédéfinie à l'aide d'un masque de saisie.

3. Procédé (600) selon l'une des revendications précédentes,
**caractérisé en ce**
**que** la signature de soupape (310) est mise à jour à intervalles réguliers.

4. Procédé (600) selon l'une des revendications précédentes,
**caractérisé en ce**

4.1 **qu'**une signature de rupture (330) est dérivée à partir de la signature de soupape (310) ;
4.1.1 dans lequel la signature de rupture (330) permet d'associer à chaque position réelle de l'organe de soupape (125 ; 225) une plage de pressions qui peuvent être atteintes lors de la rupture du ressort (175) ;
4.2 dans lequel la rupture du ressort (175) est déterminée par le fait que la pression réelle mesurée correspond à l'une des pressions qui peuvent être associées à la position réelle mesurée de l'organe de soupape (125 ; 225) à l'aide de la signature de rupture (330).

5. Procédé (600) selon l'une des revendications précédentes,
**caractérisé en ce**

5.1 **que** la position réelle de l'organe de soupape (125 ; 225) est mesurée et enregistrée à différents instants et
5.2 la pression réelle dans l'entraînement (140) pneumatique est mesurée et enregistrée aux différents instants ;
5.3 dans lequel la rupture du ressort (175) est déterminée par le fait que les positions réelles et les pressions réelles enregistrées sont analysées pour savoir si un mouvement spontané de l'organe de soupape (125 ; 225) à l'encontre de la force de ressort est apparu ;
5.3.1 dans lequel le mouvement spontané est caractéristique du mouvement de l'organe de soupape (125 ; 225) immédiatement après la rupture du ressort (175).

6. Procédé (600) selon la revendication précédente,
**caractérisé en ce**
**que** l'apparition du mouvement spontané de l'organe de soupape (125 ; 225) à l'encontre de la force de ressort est détectée à l'aide

6.1 du temps écoulé lors du mouvement spontané et/ou
6.2 de la distance parcourue lors du mouvement spontané et/ou
6.3 de l'écart maximal par rapport à une position de consigne apparaissant lors du mouvement spontané,
6.3.1 dans lequel l'entraînement (140) est régulé de sorte que la position réelle de l'organe de soupape (125 ; 225) coïncide avec la position de consigne, et/ou

6.4 des vitesses et/ou accélérations apparaissant lors du mouvement spontané et/ou

6.5 de la surface balayée lors du mouvement spontané dans un diagramme course-pression et/ou

6.6 d'une plage prédéfinie de valeurs de position et de pression, dans lequel la plage prédéfinie comprend des profils de mouvement de l'organe de soupape (125 ; 225) lors de la rupture du ressort (175),

6.6.1 dans lequel les profils de mouvement ont été obtenus par mesure et/ou calcul.

7. Procédé (600) selon l'une des revendications précédentes, **caractérisé en ce que,** lors de la détermination (630) de la rupture du ressort (175), la situation de fonctionnement actuelle et/ou des grandeurs de guidage de la soupape de réglage (100 ; 200) sont prises en compte.

8. Procédé (600) selon l'une des revendications précédentes, **caractérisé en ce que** la soupape de réglage (100 ; 200) présente un capteur (290) ou plusieurs capteurs (290) pour la mesure de la pression de fluide de processus.

9. Régulateur de position pour une soupape de réglage comportant un entraînement (140) précontraint,

9.1 dans lequel la soupape de réglage (100 ; 200) est destinée à faire partie d'une installation sur laquelle se déroule un processus avec un fluide de processus ;

9.2 dans lequel la soupape de réglage (100 ; 200) présente les éléments suivants :

9.2.1 un organe de soupape (125 ; 225) permettant d'influencer le fluide de processus et/ou le processus qui se déroule sur l'installation ;

9.2.2 un entraînement (140) pneumatique qui est conçu pour positionner l'organe de soupape (125 ; 225) pour influencer le fluide de processus et/ou le processus ;

9.2.2.1 dans lequel l'entraînement (140) pneumatique présente le ressort (175) ;

9.2.2.2 dans lequel le ressort (175) précontraint l'entraînement (140) ;

9.2.3 un capteur de position (160) pour la mesure de la position réelle de l'organe de soupape (125 ; 225) ; et

9.2.4 un capteur de pression (150) pour la mesure de la pression réelle dans l'entraînement (140) pneumatique ;

9.3 dans lequel le régulateur de position présente des moyens pour exécuter les étapes d'un procédé (600) selon l'une des revendications de procédé précédentes.

10. Soupape de réglage comportant un entraînement (140) précontraint, dans laquelle la soupape de réglage présente un régulateur de position selon la revendication précédente.

11. Installation suivant la technique des processus comportant une soupape de réglage selon la revendication précédente.

12. Programme informatique, comprenant des instructions qui amènent le régulateur de soupape selon la revendication 9 à exécuter les étapes de procédé selon l'une des revendications de procédé précédentes.

13. Support de données sur lequel est enregistré le programme informatique selon la revendication 12.

Fig. 1

Fig. 2

Fig. 3

Fig. 4

Fig. 5

600

```
      ┌─────────────┐
      │    Start    │
      └──────┬──────┘
             │
             ▼
        ╱─────────╲
       ╱    610    ╲
      ╱─────────────╲
             │
             ▼
      ┌─────────────┐
      │     620     │◄──────────┐
      └──────┬──────┘           │
             │                  │
             ▼                  │
          ◇─────◇               │
         ╱  630  ╲   Nein       │
         ◇───────◇──────────────┘
             │ Ja
             ▼
        ╱─────────╲
       ╱    640    ╲
      ╱─────────────╲
             │
             ▼
      ┌─────────────┐
      │    Stopp    │
      └─────────────┘
```

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4976144 A
- DE 102015225999 A1
- WO 2004074947 A1
- DE 29612346 U1
- WO 2009111101 A1
- DE 6930665 U

**In der Beschreibung aufgeführte Nicht-Patentliteratur**

- **RALPH HERBRICH**. Ventildiagnose. *Stellventile, Oldenburg Industrieverlag*, 2004, ISBN 13: 978-3486630558